# EUROPEAN PATENT APPLICATION

(11) **EP 2 234 010 A1**
(43) Date of publication of application: **29.09.2010**
(21) Application number: 09004129.4
(22) Date of filing: 23.03.2009
(51) Int. Cl.: G06F 3/06

(54) **Method setting hidden storage area in a flash memory**

(71) Applicant: Digi-Link Electronics Corporation, Jhongshan District Taipei City 10480 (TW)
(72) Inventor: Chen, Jeng, Jhongshan District Taipei City (TW); Liu, Le-Tsai, Jhongshan District Taipei City (TW)
(74) Representative: TER MEER - STEINMEISTER & PARTNER GbR

(57) **Abstract**

A method sets hidden storage area in a flash memory (3) firstly divides the flash memory into a plurality of storage areas. A memory controller (33) assigns a logical unit number (LUN) to each of the plurality of storage areas, thus simulating the plurality of storage areas as several physically-separate hard disk drives (31, 32). The memory controller (33) skips reporting the LUN of hidden hard disk drive (32) when answering inquiry command from a host computer (4). The hidden hard disk drive (32) can only be accessed by the host computer (4) with a specific application program (43). Therefore, the data in the hidden hard disk drive (32) can be prevented from attacking of viruses and hackers.

## Description

### BACKGROUND OF THE INVENTION

### Field of the Invention

The present invention relates to a flash memory, especially to a method setting hidden storage area in a flash memory.

### Description of Prior Art

In the ear of information, complicated or daily works of people rely much on computer. Generally, the processed data of computer is kept in computer storage for future use.

The conventional mass storage for computer is hard disk drive (HDD), which is a mechanical device with magnetic head and platter. HDD can provide large data capacity. However, it has the drawbacks of accessing speed limitation, heat generation, noise and being fragile to vibration and shock. Therefore, solid state drive implemented by flash memory is developed to replace HDD.

Flash memory is a kind of non-volatile memory and does not have mechanical structure. Therefore, the flash memory has the advantages of high accessing speed, lower noise and shock-proof feature. As the progress of semiconductor manufacturing technology, the flash memory is developed to provide high storage capacity with reducing price.

However, all kinds of computer storage devices are vulnerable to computer viruses and hacker, and have the risk of data loss or damage. It is important issues to provide security mechanism to protect the computer storage devices from attach of computer viruses and hackers. There are commercially available anti-virus software and firewall to fulfill this mission. The provision of firewall lags the connection speed to computer network and also causes inconvenience of user. Sometimes user tends to disable the function of firewall for his convenience, as a result, his computer is vulnerable to virus. Even thought user computer might be installed with anti-virus software, user needs to frequently update virus code for effective protection. The computer virus has fast propagation and complicated varieties, occasionally, anti-virus developer cannot find solution in time.

It is general practice to divide a single computer storage device into a plurality of partitions for ease of management and data classification. The computer virus basically attacks any files of the single computer storage device, no matter which partition it is. Those partitions belong to the single computer storage device and therefore, the host computer can identify the partitions and know standard accessing path as long as the single computer storage device is plugged to the host computer.

It is desirable to provide a method to simulate single computer storage as a plurality of physically-separate storage areas, wherein a hidden storage area can not be accessed in ordinary way. Therefore, the data in the hidden storage area are can be prevented from attacking of viruses and hackers.

### SUMMARY OF THE INVENTION

In the present invention, a flash memory is simulated as several physically-separate hard disk drives, which includes at least one hidden hard disk drive. Secure data is stored in the hidden simulated hard disk drive. The presence of the hidden simulated hard disk drive is not reported to a host computer when the host computer sends a query command to the flash memory simulating several physically-separate hard disk drives.

According to one aspect of the invention, the flash memory is simulated as several physically-separate hard disk drives and a memory controller assigns a Logical Unit Number (LUN) to each of the simulated hard disk drives. The LUN and relevant information of a hidden simulated hard disk drive is not reported to a host computer when the host computer sends a query command to the memory controller of the flash memory. Therefore, the host computer connected to the flash memory can not be aware of the hidden simulated hard disk drive.

According to another aspect of the invention, the flash memory is simulated as several physically-separate hard disk drives and a memory controller assigns a Logical Unit Number (LUN) to each of the simulated hard disk drives. The LUN of at least one simulated hard disk drive is not reported to a host computer and thus the simulated hard disk drive is hidden from accessing. The hidden simulated hard disk drive can only be accessed by predetermined specific application program to enhance security.

### BRIEF DESCRIPTION OF DRAWING

The features of the invention believed to be novel are set forth with particularity in the appended claims. The invention itself, however, may be best understood by reference to the following detailed description of the invention, which describes an exemplary embodiment of the invention, taken in conjunction with the accompanying drawings, in which:
Fig. 1A to Fig. 1C show the addressing scheme according to an embodiment of the present invention.
Fig. 2 shows a block diagram for a system implementing the method of the present invention.
Fig. 3 shows a flowchart for implementing the method according to an embodiment of the present invention.
Fig. 4 shows accessing of the flash memory according to an embodiment of the present invention.

### DETAILED DESCRIPTION OF THE INVENTION

The present invention is demonstrated with preferred embodiment thereof with accompanying drawings.

In the present invention, a flash memory 3 is simulated as several hard disk drives by Logical Block Address (LBA). Moreover, the flash memory 3 is simulated as several physically-separate Small Computer System Interface (SCSI) hard disk drives in analogy to a SCSI card connected to a plurality of SCSI hard disk drives.

The minimal storage unit for conventional SCSI hard disk drive is sector, where each sector has 512 bytes and is labeled with sector number defined by logical block addressing (LBA) scheme. When data accessing is to be performed for the SCSI hard disk drive, a controller unit of the SCSI hard disk drive converts the LBA sector number to a physical location in the SCSI hard disk drive.

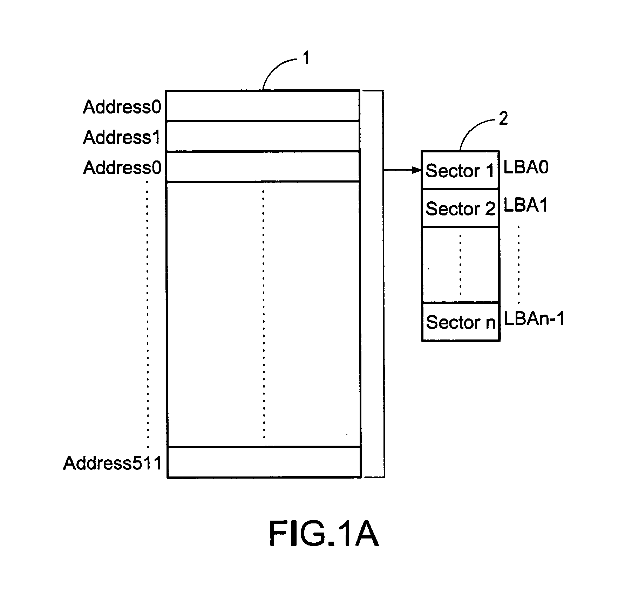

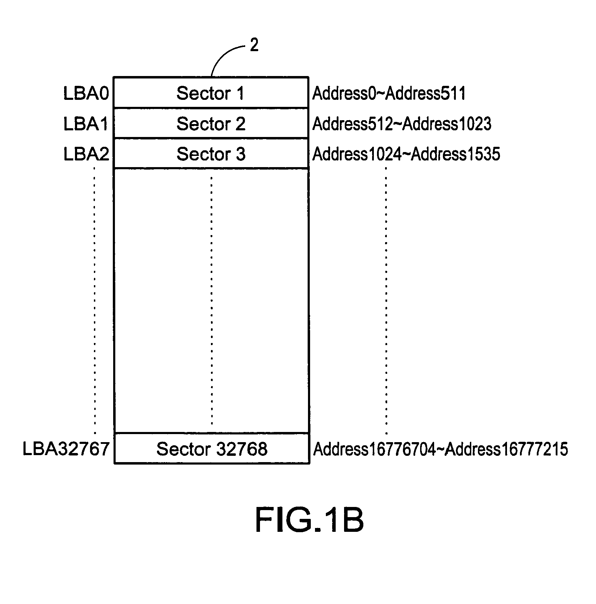

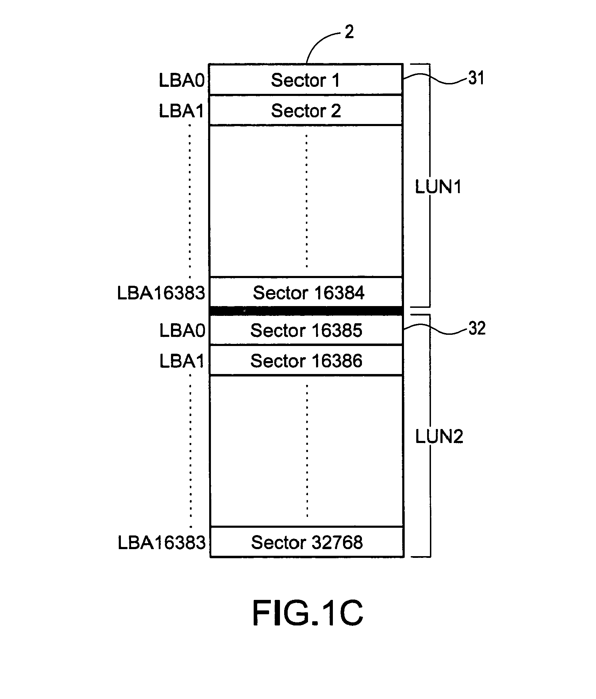

Fig. 1A and Fig. 1B show the addressing scheme according to an embodiment of the present invention. As shown in Fig. 1A, the internal physical address 1 of the flash memory 3 is simulated as sector of SCSI hard disk drive. In the flash memory 3, a physical address 1 represents a data byte; therefore, 512 physical addresses 1 are simulated to a sector 2. For example, address 0 to address 511 in the flash memory 3 are simulated as a first sector, address 512 to address 1023 in the flash memory 3 are simulated as a second sector and so on.

As shown in Fig. 1B, the flash memory 3 is simulated to be a SCSI hard disk drive according to LBA scheme. The internal physical address of the flash memory 3 is that shown in Fig. 1B, no matter whether the simulated SCSI hard disk has single partition or multiple partitions (for example two partitions). For example, if the capacity of the flash memory 3 is 16MB and the flash memory 3 is simulated to be a single-partition SCSI hard disk, the storage area includes 32768 sectors, namely, LBA0 to LBA32767. When the flash memory 3 is simulated to be a SCSI hard disk with two-partition, where each partition has 8MB memory, each of the partition has 16384 sectors. More particularly, the first partition has storage area of LBA0 to LBA16383, and the second has storage area of LBA16384 to LBA32767.

The two partitions in the SCSI hard disk simulated by the flash memory 3 substantially belong to the same flash memory 3, even thought there are two partitions. The host computer 4 sends a query commands to the flash memory 3 for information thereof when the flash memory 3 is plugged to the host computer 4. A memory controller 33 sends the information of the flash memory 3 to the host computer 4 once the memory controller 33 receives the query command. The host computer 4 is still aware of the presence of two partitions, even though protection and hiding scheme is employed for the two partitions.

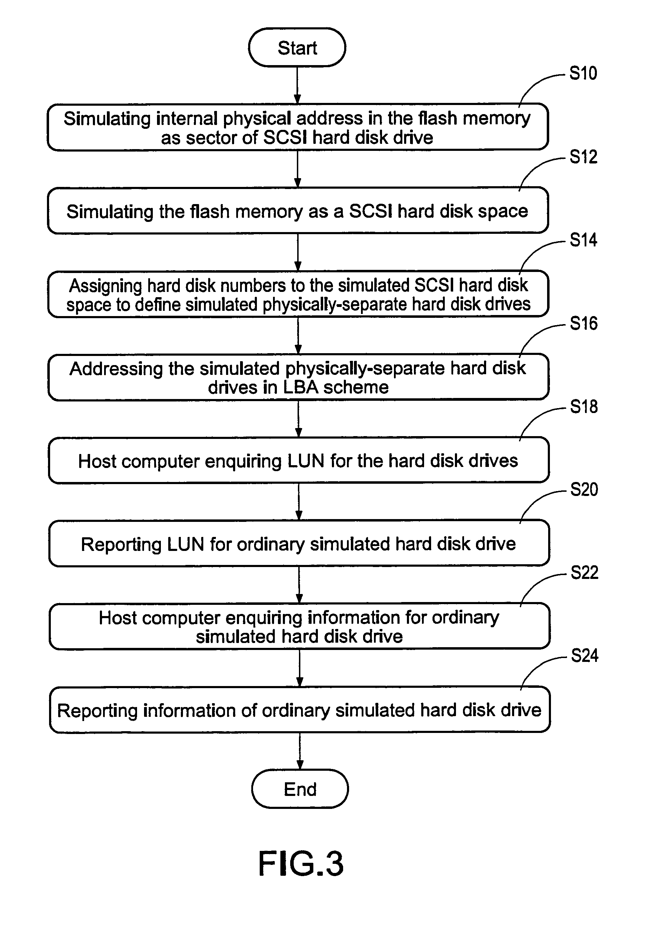

Therefore it is desirable to simulate the flash memory 3 as two physically-separate SCSI hard disk drives 31 and 32 instead of simulating the flash memory 3 as a single SCSI hard disk drive. As shown in Fig. 3C, a unique hard disk number is assigned to each of the two simulated SCSI hard disk drives 31 and 32. Afterward, the simulated SCSI hard disk drives 31 and 32 with different hard disk numbers are addressed in LBA scheme. For example, the first simulated SCSI hard disk drive 31 is assigned with hard disk number 1 and is addressed with LBA0 to LBA16383. The second simulated SCSI hard disk drive 32 is assigned with hard disk number 2 and is also addressed with LBA0 to LBA16383. Therefore, the two simulated SCSI hard disk drives 31 and 32 are identified as physically-separate and individual hard disk drives by the host computer 4. According to an embodiment of the present invention, the hard disk number can be, but not limited to, Logical Unit Number (LUN).

The present invention will be exemplified with LUN. The memory controller 33 in the flash memory 3 stores data into or fetches data from the physical address 1 in the flash memory 3 by calculating LUN and LBA. For example, if data is to be stored to the LBA4553 sector of the second hard disk drive 32 (with LUN 2) in the flash memory 3, the flash memory 3 will calculate the physical address for the data. The first simulated SCSI hard disk drive 31 has 16384 sectors (with 8M memory) and each sector stores 512 byte data. Therefore, the LBA0 sector of the second hard disk drive 32 starts from the address of 8388608 =(16384 * 512). Therefore, the LBA4553 sector of the second hard disk drive 32 (with LUN 2) is corresponding to the physical address 10719744=8388608+ (4553 * 512) according to the management of the memory controller 33. Therefore, the data is written to the physical address 10719744,

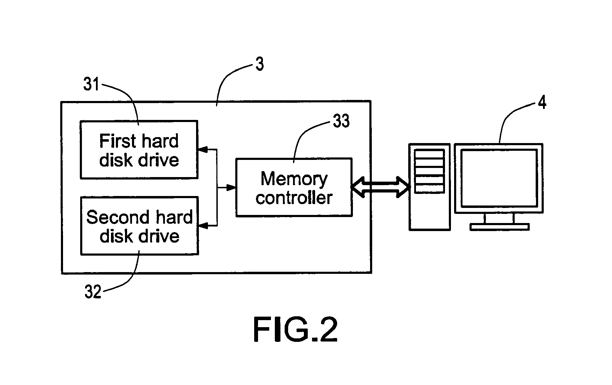

Fig. 2 shows a block diagram for a system implementing the method of the present invention. The flash memory 3 is composed of the two simulated hard disk drives 31 and 32, and communicates with the host computer 4 through the memory controller 33. Moreover, the memory controller 33 is configured to identify the two simulated hard disk drives 31 and 32 as ordinary simulated hard disk drive or hidden simulated hard disk drive. As mentioned above, the flash memory 3 is simulated to as two physically-separate hard disk drives. When the flash memory 3 is connected to the host computer 4, the host computer 4 sends a query command such as Inquiry command for SCSI hard disk drive to inquire the number of hard disk drive (namely the number of hard disk drive simulated in the flash memory 3) connected to the host computer 4. The memory controller 33 reports to the host computer 4 with reference to a configuration of the flash memory 3. For example, if the second simulated hard disk drive 32 is configured as hidden simulated hard disk drive in manufacture side, the memory controller 33 reports the hosts that only one hard disk drive with LUN 1 exists. Therefore, the host computer 4 only is only aware of the first simulated hard disk drive 31. When the host 4 sends other command (such as Read Capacity command for SCSI device) to the flash memory 3, the command is interpreted to access the first simulated hard disk drive (the ordinary simulated hard disk drive) 31 only, and to skip the accessing of the second simulated hard disk drive (the hidden simulated hard disk drive) 32 with LUN 2.

Fig. 3 shows a flowchart for implementing the method according to an embodiment of the present invention. The internal physical address 1 in the flash memory 3 is first simulated as sector 2 of SCSI hard disk drive in step S10. The flash memory 3 is then simulated as SCSI hard disk space according to the sector 2 of SCSI hard disk drive in step S12 (Namely, the SCSI hard disk space is like a single SCSI hard disk drive because the memory controller 33 maps the internal physical address 1 in the flash memory to sector 2 of SCSI hard disk drive). Afterward, LUN is assigned to the simulated SCSI hard disk space in step S 14 whereby the simulated SCSI hard disk space can be simulated as two physically-separate hard disk drives 31 and 32. Therefore, the simulated hard disk drives 31 and 32 can be accessed in LBA scheme (step S16).

When the flash memory 3 is connected to the host computer 4, the host computer 4 sends inquiry command to the memory controller 33 in the flash memory 3 (step S18) for inquiring the number and the LUN information for the simulated hard disk drive(s) in the flash memory 3. The memory controller 33 identifies the simulated hard disk drive(s) in the flash memory 3 (namely the hard disk drives 31 and 32) as ordinary simulated hard disk drive or hidden simulated hard disk drive, and then reports the host computer 4 only the number and LUN of the ordinary simulated hard disk drive in step S20. When the host computer 4 knows the number and LUN of the ordinary simulated hard disk drive in the flash memory 3, the host computer 4 sends other command (such as Read Capacity command) to the memory controller 33 in step S22, and the memory controller 33 only reports the capacity of the ordinary simulated hard disk drive in the flash memory 3 to the host 4 in step S24.

The host computer 4 connected to the flash memory 3 cannot be aware of the hidden simulated hard disk drive. Therefore, the virus present in the host computer 4 or hacker intruded through the host computer 4 cannot find and attack the hidden simulated hard disk drive in the flash memory 3 when the host computer 4 has only normal accessing way for the flash memory 3. Therefore, the data stored in the hidden simulated hard disk drive in the flash memory can be prevented from the attack of virus and hacker.

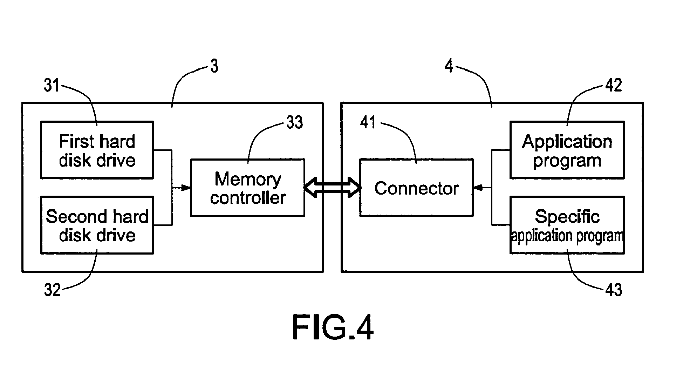

As shown in Fig. 4, when an ordinary application program (AP) 42 in the host computer 4 is to access the flash memory 3 (the host 4 is already connected to the memory controller 33 through a connector 41), the AP 42 in the host computer 4 can only be aware of the first hard disk drive with LUN 1. Therefore, the AP 42 can only access the first simulated hard disk drive 31. When the host computer 4 wants to accesses data in the second simulated hard disk drive 32, the host computer 4 needs a corresponding specific application program 43, the specific application program 43 can be programmed by, for example, the manufacturer of the flash memory 3 with the second simulated hard disk drive 32.

As can be seen from above description, the specific application program 43 has a prior knowledge about the presentence of the hidden second simulated hard disk drive 32, namely, the specific application program 43 knows the LUN for the hidden second simulated hard disk drive 32. Therefore, the specific application program 43 can directly access the second simulated hard disk drive (the hidden simulated hard disk drive) 32 without needing the information inquired by the host computer 4. The secure data in the second simulated hard disk drive 32 is not subject to the attack of virus and hacker through ordinary accessing scheme. The creator or owner of the secure data can access the secure data through the specific application program 43.

## Claims

1. A method setting hidden storage area in a flash memory, where a host computer (4) accesses the flash memory (3) through a memory controller (33), the method comprising:
a) dividing the flash memory (3) into a plurality of storage areas;
b) assigning a hard disk number to each of the storage areas to simulate the storage areas as physically-separate hard disk drives (31, 32), wherein the memory controller (33) setting the storage areas as ordinary storage areas and hidden storage areas according to the hard disk numbers;
c) the memory controller (33) receiving a query command from the host computer (4); and
d) the memory controller (33) reporting information of the ordinary storage areas to the host computer (4).

2. The method in claim 1, wherein the hard disk number is logical unit number (LUN) for SCSI hard disk drive.

3. The method in claim 2, wherein the query command in step c is Inquiry command for SCSI hard disk drive.

4. The method in claim 3, wherein the memory controller (33) reports logical unit number of the ordinary storage areas to the host computer (4) in step d.

5. The method in claim 1, wherein the storage areas in the flash memory (3) are addressed in logical block address (LBA) scheme to simulate the storage areas as physically-separate separate hard disk drives (31, 32).

6. The method in claim 5, wherein the memory controller (33) maps the logical block address of the hard disk drives to the physical address (1) in the flash memory (3).

7. The method in claim 1, wherein the query command in step c is Read Capacity command for SCSI hard disk drive.

8. A method setting hidden storage area in a flash memory, where the flash memory (3) is simulated as a plurality of physically-separate hard disk drives (31, 32), and a host computer (4) accesses the flash memory (3) through a memory controller (33), the method comprising:
a) defining sectors (2) of physical hard disk drive in the physical address (1) of the flash memory (3);
b) simulating the flash memory (3) as a simulated hard disk space;
c) assigning hard disk numbers to the simulated hard disk space to divide the simulated hard disk space into physically-separate hard disk drives (31, 32), wherein the memory controller (33) setting the hard disk drives as ordinary hard disk drives and hidden hard disk drives according to the hard disk numbers;
d) addressing the sectors (2) in the hard disk drives (31, 32) with logical block address (LBA)\ scheme;
e) the memory controller (33) receiving Inquiry command from the host computer (4);
f) the memory controller (33) reporting hard disk number of the ordinary hard disk drives to the host computer (4).

9. The method in claim 8, wherein the hard disk number is logical unit number (LUN) for SCSI hard disk drive.

10. The method in claim 8, further comprising a step g) after the step f): the memory controller (33) receives Read Capacity command from the host computer (4).

11. The method in claim 10, further comprising a step h) after the step g): the memory controller (33) reports capacity of each ordinary hard disk drive to the host computer (4).

12. The method in claim 8, wherein the memory controller (33) maps the logical block address of the simulated hard disk drives to the physical address (1) in the flash memory (3).
